Europäisches Patentamt

European Patent Office

Office européen des brevets

(19)

(11) Veröffentlichungsnummer : **0 168 527**
**B1**

(12) # EUROPÄISCHE PATENTSCHRIFT

(45) Veröffentlichungstag der Patentschrift :
05.04.89

(21) Anmeldenummer : 84114560.0

(22) Anmeldetag : 30.11.84

(51) Int. Cl.⁴ : **G 01 L   5/00**, G 01 M   9/00

(54) **Verfahren und Vorrichtung zur Bestimmung von Momenten bei aerodynamischen Messungen an Fahrzeugen auf Windkanalwaagen.**

(30) Priorität : 14.07.84 EP 84108318

(43) Veröffentlichungstag der Anmeldung :
22.01.86 Patentblatt 86/04

(45) Bekanntmachung des Hinweises auf die Patenterteilung : 05.04.89 Patentblatt 89/14

(84) Benannte Vertragsstaaten :
DE FR GB IT NL

(56) Entgegenhaltungen :
EP--A-- 0 168 508
DE--A-- 2 624 647
DE--A-- 2 926 213

(73) Patentinhaber : CARL SCHENCK AG
Landwehrstrasse 55 Postfach 40 18
D-6100 Darmstadt (DE)

(72) Erfinder : Giesecke, Peter, Dr.
Talstrasse 2 a
D-6104 Seeheim (Stettbach) (DE)

(74) Vertreter : Brand, Fritz, Dipl.-Ing.
Carl Schenck AG Patentabteilung Landwehrstrasse
55 Postfach 4018
D-6100 Darmstadt (DE)

EP 0 168 527 B1

## Beschreibung

Die Erfindung betrifft ein Verfahren zur Bestimmung von Roll-, Nick- und/oder Giermomenten bei aerodynamischen Messungen an Fahrzeugen auf Windkanalwaagen, bei dem die Momente aus Kraftmessungen an der Windkanalwaage ermittelt werden, sowie eine Vorrichtung zur Durchführung des Verfahrens.

Bei Fahrzeugversuchen auf Windkanalwaagen werden zur Messung von Luftkräften und Momenten Mehrkomponentenwaagen verwendet. Bekannt sind sogenannte 6-Komponentenwaagen und 7-Komponentenwaagen.

Bei 6-Komponentenwaagen ist eine einzige Waagenplattform vorhanden, auf der das Fahrzeug steht bzw. befestigt ist. Es werden die Kräfte in den drei Raumaschsen und die Momente um diese Achsen ermittelt, das heißt insgesamt sechs Komponenten.

Bei 7-Komponentenwaagen sind vier einzelne Waagenplattformen vorgesehen, auf denen die vier Räder eines Fahrzeugs stehen bzw. befestigt sind. Bei dieser Waagenbauart werden die Aufstandskräfte der vier Räder einzeln gemessen. Weiterhin werden die Seitenkräfte in den beiden Fahrzeugquerachsen sowie die Luftwiderstandskraft in der Fahrzeuglängsachse gemessen, also insgesamt sieben Komponenten. Aus diesen werden die interessierenden Kräfte und Momente ermittelt.

Es hat sich nun überraschenderweise gezeigt, daß die Genauigkeit der Momentenmessung bei 6-Komponentenwaagen erheblich verbessert werden kann, wenn bei angeströmtem Fahrzeug die geringfügigen, durch Luftkräfte bedingten Lageänderungen des Fahrzeugs auf der Waage infolge der Elastizität von Reifen und Radaufhängung berücksichtigt werden. Bei 7-Komponentenwaagen werden diese Lageänderungen teilweise selbsttätig kompensiert.

Durch das erfindungsgemäß vorgeschlagene Verfahren mit Berücksichtigung der Lageänderung des Fahrzeugs auf der Waage und der Bildung von Korrekturwerten nach Patentanspruch 1 kann die Meßgenauigkeit von 6-Komponentenwaagen bei der Momentenmessung erhöht und der Meßfehler gegenüber 7-Komponentenwaagen nicht unerheblich herabgesetzt werden. Die weiteren Patentansprüche betreffen Ausgestaltungen der Erfindung sowie Vorrichtungen zur Durchführung des beanspruchten Verfahrens, wobei auch Ausgestaltungen für 7-Komponentenwaagen angegeben sind.

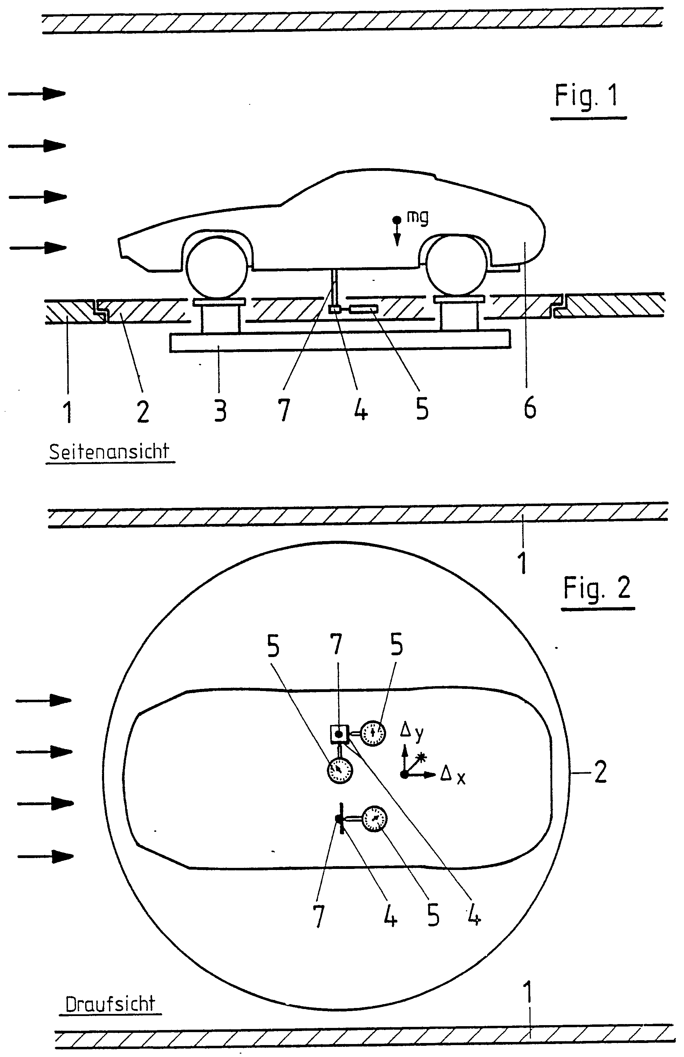

Die Erfindung wird nachstehend an einem Ausführungsbeispiel in der Zeichnung dargestellt und in der Beschreibung näher erläutert. Die Zeichnung zeigt in stark vereinfachter, schematischer Darstellung in Figur 1 eine Seitenansicht und in Figur 2 eine Draufsicht auf eine Windkanalwaage mit einem Fahrzeug und den erfindungsgemäßen Längenmeßvorrichtungen.

Das im Windkanal 1 zu prüfende Fahrzeug 6 steht auf einer 6-Komponenten-Windkanalwaage 3. Die Räder des Fahrzeugs sind hierbei in geeigneter Weise an Aufstandsflächen der Waage 3 befestigt. Die Aufstandsflächen sind fest miteinander bzw. mit der Waage verbunden, so daß nicht Einzelkräfte an den Rädern, sondern Gesamtkräfte ermittelt werden. Der Boden unter dem Fahrzeug bzw. im Bereich der Waage wird durch einen Drehtisch 2 gebildet, der berührungsfrei zur Windkanalwaage 3 angeordnet ist. Weitere Einzelheiten zum Aufbau und der Meßeinrichtung von Windkanalwaagen sind dem Fachmann bekannt und daher nicht dargestellt.

An der Unterseite des Fahrzeugs 6 sind steife, dünne Stahlstifte 7 angebracht, die in Ausnehmungen des Drehtischs 2 hineinragen. Am unteren Ende dieser Stahlstifte 7 befinden sich plane Meßflächen 4, die von Meßuhren 5 abgetastet werden. Die Meßuhren 5 sind ebenfalls innerhalb der Ausnehmungen des Drehtisches 2 angeordnet.

Im dargestellten Ausführungsbeispiel sind die Stahlstife 7 mit Abstand voneinander in einer Querachse des Fahrzeugs 6 angebracht. Es sind 2 Stahlstifte vorgesehen, wobei ein Stahlstift zwei im Winkel von 90° zueinander angeordnete Meßflächen 4 aufweist. Mit Hilfe von drei Meßuhren, wie dargestellt, kann die Längsverschiebung des Fahrzeugs an zwei Meßstellen der Querachse und die Querverschiebung an einer Meßstelle erfaßt werden, wenn Luftkräfte auf das Fahrzeug einwirken. Bei der Anordnung von zwei Meßstellen an einer Achse kann der Einfluß von Drehbewegungen des Fahrzeugs berücksichtigt bzw. ausgeschaltet werden.

Anstelle der Meßanordnung mit zwei Stahlstiften bzw. Meßstellen kann auch ein Stahlstift mit zwei im Winkel von 90° zueinander angeordneten Meßflächen und entsprechend angeordneten Meßuhren im Schwerpunkt des Fahrzeugs vorgesehen werden. Ebenso ist es möglich, zwei Stahlstifte mit Meßflächen und Meßuhren an der Längsachse des Fahrzeugs anzuordnen. Auch kombinierte Anordnungen an der Längs- und Querachse oder an anderen geeigneten Stellen am Fahrzeug sind möglich.

Bei der beschriebenen Anordnung sind als Längenmeßeinrichtungen mechanische Meßuhren vorgesehen. Zweckmäßigerweise werden jedoch Meßeinrichtungen mit elektrischem Ausgang verwendet, deren Ausgangssignale leicht weiterverarbeitet werden können. So können z. B. auch kapazitive oder induktive, optische oder andere geeignete Längenmeßeinrichtungen verwendet werden.

Der Nachteil der Störung des Strömungsprofils durch die dem Luftstrom ausgesetzten Stahlstifte 7 kann vermieden werden, wenn man ein berührungsloses Meßverfahren anwendet, beispielsweise ein kombiniertes optisch-elektrisches Verfahren mit einer am Fahrzeugboden befestigten Laserdiode, die auf eine in der Drehscheibe 2 eingebaute Diodenmatrix ausgerichtet ist. Die Wanderung des Lichtflecks auf der Matrix in x- und y-Richtung wird direkt in digitaler Form ausgegeben und ist somit ein Maß für die Fahrzeugverschiebung. Die digitalen Meßwerte können zur Berichtigung der gemessenen Momente z. B. in einem Rechner weiterverarbeitet werden.

Die Ausgangssignale der Meßuhren bzw. der Längenmeßeinrichtungen dx und dy ergeben die Verschiebung des Massenschwerpunktes des zu untersuchenden Fahrzeugs. Aus der ermittelten Schwerpunktverschiebung und der Gewichtskraft mg des Fahrzeugs erhält man die zur Korrektur von Nick- und Rollmoment erforderlichen Daten. Die Korrekturwerte stellen hierbei Momente bzw. Momentenfehler dar, die zur Berichtigung der gemessenen Momente verwendet werden.

Auf das Giermoment wirkt sich die Gewichtskraft durch Verschiebung des Fahrzeugschwerpunktes nicht aus, d. h. das Giermoment wird durch die Änderung der Lage der Fahrzeugmasse nicht beeinflußt. Jedoch können Fehler durch Luftkräfte auftreten, die sich bei Lageänderungen des Fahrzeugs sowohl auf das Giermoment als auch auf Nick- und Rollmoment auswirken. Wenn beispielsweise das Fahrzeug in der Querachse verschoben wird (in Richtung dy) ergibt sich durch die Luftwiderstandskraft (in Fahrzeuglängsrichtung wirkend) ein Fehler beim Giermoment. Eine Verschiebung in der Fahrzeuglängsachse ergibt einer Fehler beim Nickmoment, wenn Auftriebskräfte am Fahrzeug wirken usw. Da die Luftkräfte am Fahrzeug im allgemeinen um eine Größenordnung kleiner sind als die Gewichtskraft des Fahrzeugs, ist ihre Berücksichtigung nur bei hohen Genauigkeitsanforderungen notwendig.

Bei der Korrektur von Fehlereinflüssen durch Luftkräfte kann es erforderlich sein, als weitere Meßgröße die Höhenverlagerung des Fahrzeugs zu ermitteln (im Ausführungsbeispiel nicht dargestellt).

Die an den Längenmeßeinrichtungen gewonnenen Meßdaten, die vorzugsweise als elektrische Signale vorliegen, können einer sicht dargestellten Auswerteeinrichtung zugeführt werden, die aus den gemessenen Werten, der Gewichtskraft des Fahrzeugs und/oder den jeweils relevanten Luftkräften Korrekturwerte bildet und die gemessenen Momente durch die Korrekturwerte berichtigt. Die Auswerteeinrichtung kann auch als Recheneinrichtung bzw. Teil einer Recheneinrichtung ausgebildet sein, wobei auch die bei Windkanalwaagen meist vorhandene Recheneinrichtungen verwendet werden können.

Bei Verwendung von Recheneinrichtungen können die Korrekturwerte fortlaufend aus den gemessenen Werten der Längenmeßeinrichtungen und/oder Luftkräfte gebildet und die gemessenen Momente fortlaufend berichtigt werden, so daß immer die berichtigten Momentenwerte zur Verfügung stehen (On-Line-Verfahren).

In einem vereinfachten Verfahren können die Korrekturwerte zur Berichtigung der auf der Windkanalwaage gemessenen Momente auch rechnerisch aus den Fahrzeugdaten und in Abhängigkeit von den einwirkenden Luftkräften ermittelt werden oder es kann aus Versuchs- oder Erfahrungswerten eine Abschätzung der erforderlichen Korrekturwerte vorgenommen werden. Bei dieser Verfahrensweise können Längenmeßeinrichtungen an der Windkanalwaage bzw. am Fahrzeug entfallen.

Bei 7-Komponenten-Windkanalwaagen ist auf Grund der unbekannten Lage des Kraftangriffspunktes der Radlast bzw. der Reifendruckresultierenden eine Korrektur der Schwerpunktsverschiebung des Fahrzeugs allein nicht ausreichend, um Einflüsse auf die Momentenmessung auszuschalten. Die vier Einzelplattformen von 7-Komponenten-Windkanalwaagen werden daher erfindungsgemäß jeweils mit einer « Resultierendenmeßeinrichtung » ausgerüstet. Eine solche Einrichtung erlaubt es, die tatsächliche Lage des Angriffspunktes erlaubt es, die tatsächliche Lage des Angriffspunktes der Radlast bzw. der Latschresultierenden an einer Plattform zu bestimmen. Die Meßeinrichtung kann beispielsweise aus einer Anordnung von jeweils drei oder vier Kraftmeßdosen bestehen, auf die die Einzelplattformen abgestützt werden. Die Plattformen mit den Kraftmeßeinrichtungen können so flach ausgebildet werden, daß ihr Einbau in vorhandene Anlangen bzw. der Umbau solcher Anlagen möglich ist.

Aus den Signalen der Kraftmeßdosen einer Einzelplattform und aus der geometrischen Anordnung der Kraftmeßdosen läßt sich rechnerisch mit Hilfe einer geeigneten Rechenschaltung leicht die jeweilige Lage des Kraftangriffspunktes der Radlast bzw. die Lageänderung des Kraftangriffspunktes bezogen auf eine neutrale Lage an einer Einzelplattform bestimmten. Aus der Verschiebung des Kraftangriffspunktes der vier einzelnen Räder und der Lageänderung des Gesamtfahrzeugs werden die Korrekturwerte für die Momentenmessungen gebildet.

**Patentansprüche**

1. Verfahren zur Bestimmung von Roll-, Nick- und/oder Giermomenten bei aerodynamischen Messungen an Fahrzeugen auf Windkanalwaagen (3), bei denen die Momente aus Kraftmessungen an der Windkanalwaage (3) ermittelt werden, dadurch gekennzeichnet, daß bei der Momentenermittlung Lageänderungen des Fahrzeugs (6) auf der Waage (3), die sich durch die Einwirkung von Luftkräften infolge von Elastizitäten im Fahrwerk, nämlich von Radaufhängung und Reifen, ergeben, berücksichtigt werden, wobei aus Lageänderungen des Fahrzeugs (6) sowie Gewichts- und/oder Luftkräften Korrekturwerte gebildet werden und die gemessenen bzw. ermittelten Momente mit Hilfe der Korrekturwerte berichtigt werden.

2. Verfahren nach Anspruch 1, dadurch gekennzeichnet, daß Verschiebungen des Fahrzeugs (6) aus einer Mittel- oder Anfangslage gemessen und aus den gemessenen Werten die Korrekturwerte gebildet werden.

3. Verfahren nach Anspruch 2, dadurch gekennzeichnet, daß die Abweichung der Längs- und/oder Querachse des Fahrzeugs (6) aus der Mittellage in einer im wesentlichen horizontalen Ebene gemessen wird.

4. Verfahren nach einem der vorhergehenden Ansprüche dadurch gekennzeichnet, daß die Korrekturwerte fortlaufend gebildet und die Momente fortlaufend berichtigt werden.

5. Verfahren nach einem der vorhergehenden Ansprüche für Messungen mit 7-Komponenten-Windkanalwaagen, dadurch gekennzeichnet, daß die Lageänderung des Kraftangriffspunktes der Radlast für jede einzelne Waagenplattform bzw. jedes einzelne Rad ermittelt wird und daß die ermittelten Werte zur Bildung der Korrekturwerte verwendet werden.

6. Vorrichtung zur Durchführung des Verfahrens nach einem der vorhergehenden Ansprüche, mit einer Windkanalwaage (3) mit Momentenmeß-einrichtungen, gekennzeichnet durch Längen-meßeinrichtungen, die an der Windkanalwaage (3) und/oder am Fahrzeug (6) angeordnet sind und die Abweichungen der Längsachse und/oder der Querachse des Fahrzeugs (6) aus einer Mittellage erfassen und durch eine Auswerteeinrichtung, die aus den gemessenen Werten der Längenmeßeinrichtungen sowie Gewichts- und/oder Luftkräften die Korrekturwerte bildet und die gemessenen Momente mit Hilfe der Korrekturwerte berichtigt.

7. Vorrichtung nach Anspruch 6, dadurch gekennzeichnet, daß die Längenmeßeinrichtungen als mechanische, elektrische, optische oder kombinierte Meßeinrichtungen (5) ausgebildet sind.

8. Vorrichtung nach Anspruch 6 oder 7, dadurch gekennzeichnet, daß mindestens eine Län-genmeßeinrichtung im Schwerpunkt des Fahr-zeugs (6) angeordnet ist.

9. Vorrichtung nach Anspruch 6 oder 7, da-durch gekennzeichnet, daß die Längenmeßein-richtungen an der Längs- und/oder der Querachse des Fahrzeugs (6) angeordnet sind.

10. Vorrichtung nach Anspruch 6, dadurch gekennzeichnet, daß die Auswerteeinrichtung als Recheneinrichtung ausgebildet ist.

11. Vorrichtung nach einem der vorhergehenden Ansprüche 6-10 für Messungen mit 7-Kompo-nenten-Windkanalwaagen, dadurch gekennzeich-net, daß die vier Einzelplattformen der Waage in vertikaler Richtung jeweils auf mindestens drei Kraftmeßeinrichtungen abgestützt sind und daß eine Rechenschaltung vorgesehen ist, die aus den Signalen der Kraftmeßeinrichtungen und aus ihrer geometrischen Anordnung die Lageänderung des Kraftangriffspunktes der Radlast für jedes einzelne Rad ermittelt.

**Claims**

1. Process for determining rolling, pitching, and/or yawing moments in aerodynamic measurements of vehicles on wind tunnel scales (3), in which the moments are determined from forces measured on the wind tunnel scales (3), characterised in that during the determining of moments, changes in position of the vehicle (6) on the scales (3) due to the effect of air forces resulting from elasticities in the undercarriage, that is, from the wheel suspension and tyres, are taken into account, in which adjustment values are formed from the changes in position of the vehicle (6) and weights and/or air forces, and the measured or determined moments are corrected with the help of the adjustment values.

2. Process according to claim 1, characterised in that displacements of the vehicle (6) are measured from a central or starting position, and the adjustment values are formed from the measured values.

3. Process according to claim 2, characterised in that the deviation of the longitudinal or transverse axis of the vehicle (6) from the central position is measured in a substantially horizontal plane.

4. Process according to one of the foregoing claims, characterised in that the adjustment values are continually formed, and the moments are continually corrected.

5. Process according to one of the foregoing claims for measurements with 7-component wind tunnel scales, characterised in that the change of position of the point of application of force of the wheel load is determined for each individual wheel platform or each individual wheel, and that the values determined are used to form the adjustement values.

6. Device for carrying out the process according to one of the foregoing claims, with wind tunnel scales (3) with moment measuring devices, characterised by length-measuring devices, which are arranged on the wind tunnel scales (3) and/or on the vehicle (6), and which register deviations of the longitudinal axis and/or the transverse axis of the vehicle (6) from a central position, and by an evaluating device which forms the adjustment values from the measured values of the length-measuring devices and weights and/or air forces, and corrects the measured moments with the help of the adjustment values.

7. Device according to claim 6, characterised in that the length-measuring devices are in the form of mechanical, electrical, optical or combined measuring devices.

8. Device according to claim 6 or 7, characterised in that at least one length-measuring device is arranged in the centre of gravity of the vehicle (6).

9. Device according to claim 6 or 7, characterised in that the length-measuring device are arranged along the longitudinal or transverse axis of the vehicle (6).

10. Device according to claim 6, characterised in that the evaluating device is in the form of a computing device.

11. Device according to one of the foregoing claims 6-10 for measurements with 7-component wind tunnel scales, characterised in that the four individual platforms of the scales are each supported vertically on at least three force-measuring devices, and that a computing circuit is provided which determines the change in position of the point of application of force of the wheel load for each individual wheel from the signals of the force-measuring devices, and from their geometrical position.

**Revendications**

1. Procédé pour déterminer des moments de roulis, de tangage et/ou de lacet au cours de mesures aérodynamiques sur des véhicules sur des bascules de soufflerie (3), où l'on détermine les moments à partir de mesures dynamométriques sur la bascule de soufflerie (3), caractérisé en ce qu'on fait intervenir des variations de position du véhicule (6) sur la bascule (3) qui se produisent sous l'effet de forces dues à l'air en raison d'élasticités dans le train de roulement, c'est-à-dire de la suspension des roues et des pneumatiques, pour la détermination des moments, en formant, à partir de variations de position du véhicule (6), ainsi que des forces de pesanteur et/ou dues à l'air, des valeurs de correction, et l'on corrige les moments mesurés ou déterminés à l'aide des valeurs de correction.

2. Procédé selon la revendication 1, caractérisé en ce qu'on mesure des déplacements du véhicule (6) par rapport à une position centrale ou initiale et l'on forme les valeurs de correction à partir des valeurs mesurées.

3. Procédé selon la revendication 2, caractérisé en ce qu'on mesure l'écart de l'axe longitudinal et/ou de l'axe transversal du véhicule (6) par rapport à la position centrale dans un plan sensiblement horizontal.

4. Procédé selon l'une des revendications précédentes, caractérisé en ce qu'on forme en continu les valeurs de correction et l'on corrige les moments en continu.

5. Procédé selon l'une des revendications précédentes pour des mesures avec des bascules de soufflerie à 7 composantes, caractérisé en ce qu'on détermine la variation de position du point d'application de la charge des roues pour chaque plate-forme individuelle ou chaque roue individuelle, et l'on utilise les valeurs déterminées pour former les valeurs de correction.

6. Dispositif pour mettre en œuvre le procédé selon l'une des revendications précédentes, comportant une bascule de soufflerie (3), avec des dispositifs de mesure de moments, caractérisé par des dispositifs de mesure de longueurs qui sont placés sur la bascule de soufflerie (3) et/ou sur le véhicule (6) et qui captent des écarts de l'axe longitudinal et/ou de l'axe transversal du véhicule (6) par rapport à une position centrale, et par un dispositif de traitement qui forme les valeurs de correction à partir des valeurs mesurées des dispositifs de mesure de longueur, ainsi que des forces de pesanteur et/ou dues à l'air, et corrige les moments mesurés à l'aide des valeurs de correction.

7. Dispositif selon la revendication 6, caractérisé en ce que des dispositifs de mesure de longueurs sont réalisés sous la forme de dispositifs de mesure (5) mécaniques, électriques, optiques ou combinés.

8. Dispositif selon la revendication 6 ou 7, caractérisé en ce qu'au moins un dispositif de mesure de longueurs est placé au centre de gravité du véhicule (6).

9. Dispositif selon la revendication 6 ou 7, caractérisé en ce que les dispositifs de mesure de longueurs sont placés sur l'axe longitudinal et/ou l'axe transversal du véhicule (6).

10. Dispositif selon la revendication 6, caractérisé en ce que le dispositif de traitement est réalisé sous la forme d'un calculateur.

11. Dispositif selon l'une des revendications 6 à 10 qui précèdent, pour des mesures avec des bascules de soufflerie à 7 composantes, caractérisé en ce que les quatre plates-formes individuelles de la bascule s'appuient chacune, en direction verticale, sur au moins trois dispositifs dynamométriques, et en ce qu'on prévoit un montage de calcul qui détermine, à partir des signaux des dispositifs dynamométriques et de leur disposition géométrique, la variation de position du point d'application de la charge des roues pour chaque roue individuelle.

Fig. 1

mg

1    2    3    7    4    5    6

Seitenansicht

Fig. 2

1

5   7   5

$\Delta y$

$\Delta x$

2

7    4    5    4

Draufsicht

1